(19) **Europäisches Patentamt**
**European Patent Office**
**Office européen des brevets**

(11) **EP 3 024 365 B1**

(12) **EUROPEAN PATENT SPECIFICATION**

(45) Date of publication and mention
of the grant of the patent:
**12.06.2024 Bulletin 2024/24**

(21) Application number: **14756096.5**

(22) Date of filing: **24.07.2014**

(51) International Patent Classification (IPC):
***A47J 37/08*** (2006.01)

(52) Cooperative Patent Classification (CPC):
**A47J 37/0835**

(86) International application number:
**PCT/GB2014/000292**

(87) International publication number:
**WO 2016/012735 (28.01.2016 Gazette 2016/04)**

(54) **TOASTER**

TOASTER

GRILLE-PAIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2013 GB 201313186**

(43) Date of publication of application:
**01.06.2016 Bulletin 2016/22**

(73) Proprietors:
• **Gort-Barten, Leslie**
**Crawley, West Sussex RH11 7ST (GB)**
• **Gort-Barten, Alex**
**Crawley, West Sussex RH11 7ST (GB)**

(72) Inventors:
• **Gort-Barten, Leslie**
**Crawley, West Sussex RH11 7ST (GB)**
• **Gort-Barten, Alex**
**Crawley, West Sussex RH11 7ST (GB)**

(74) Representative: **Moore, David Simon**
**Jensen & Son**
**366-368 Old Street**
**London EC1V 9LT (GB)**

(56) References cited:
**EP-A2- 1 397 025**      **WO-A1-02/095521**
**GB-A- 2 318 502**      **US-A- 4 894 518**
**US-A1- 2004 144 257**

**Description**

The invention relates to a toaster and a method of toasting bread.

When making toast, the temperature of the toaster is not generally taken into account, or is only briefly taken into consideration which means that second or subsequent slices of toast either become too dark or too light compared to the first slice. This inconsistency of browning is annoying for the customer.

To address this problem in electronic toasters, the toaster control software is programmed with one or two time reductions for a particular toasting temperature setting. Toasters are provided with control circuits, which are generally only capable of measuring a fixed set point, typically a temperature of 40°C.

Typically, if the control circuit measures between a temperature above the set point then the toaster will reduce the timing cycle by 20 seconds for the second toasting cycle. Due to the toaster running for the same amount of time whether at 40°C or 80°C, the resulting toast will be inconsistent, being too dark for the higher parts of the range and too light for the lower parts of the range. Examples of such toasters can be found in the prior art documents GB2318502, GB2420966, US6198078, US6006656 US2003/0196556 and US2004/0144257. Further examples can be found in EP1397025 and US4894518.

The present invention therefore seeks to provide a toaster and a method of toasting bread that provides for a more uniform toast between toasting cycles.

According to a first aspect of the invention there is provided a toaster comprising the features of claim 1. The present invention discloses a toaster comprising heating elements in a toasting cavity, a temperature sensor and a timer adapted to vary the length of the toasting cycle, the toaster comprising a control unit in a PCB cavity adapted to take the measurement of the temperature after or upon actuation of the toaster, wherein a base length for the toasting cycle is defined in dependence on a browning setting and the base length of the toasting cycle is adjusted to provide an actual length of the toasting cycle in dependence at least in part on the detected temperature, wherein the temperature sensor is adapted to measure the temperature in the PCB cavity and the adjustment to the base length of the toasting cycle is made in accordance with the formula: $\Delta T=(T1-a)/b$, where $\Delta t$ is change in cycle length and $T1$ the measured temperature where a is in the range of 15-25 °C and b is in the range of -1 to -1.8 dependent on toaster configuration.

According to a second aspect of the invention there is provided a method of toasting bread in accordance with claim 4.

Preferably, a is in the range of 15-25 C, more preferably 20-22 C. Preferably b is in the range of -1 to -1.8, more preferably -1.2 to -1.5. According to the present invention, PCB cavity temperature is measured.

A particular advantage of the invention occurs if the ambient temperature is above 30°C or much lower than ambient temperature as the toaster timing can be decreased or increased, respectively, for the first toasting cycle as well as subsequent cycles. A further advantage is that the use of a formula takes up less memory on the control chips than introducing a plurality of set points, which enables lower cost processors to be used with the standard thermistors.

An exemplary embodiment of the invention will now be described in greater detail with reference to the example and drawings in which:

Fig. 1 shows a toaster
Fig. 2 shows a selection of toast made with a prior art toaster
Fig. 3 shows a graph of toaster temperature v time alteration
Fig. 4 shows a selection of toast made with a toaster of the invention

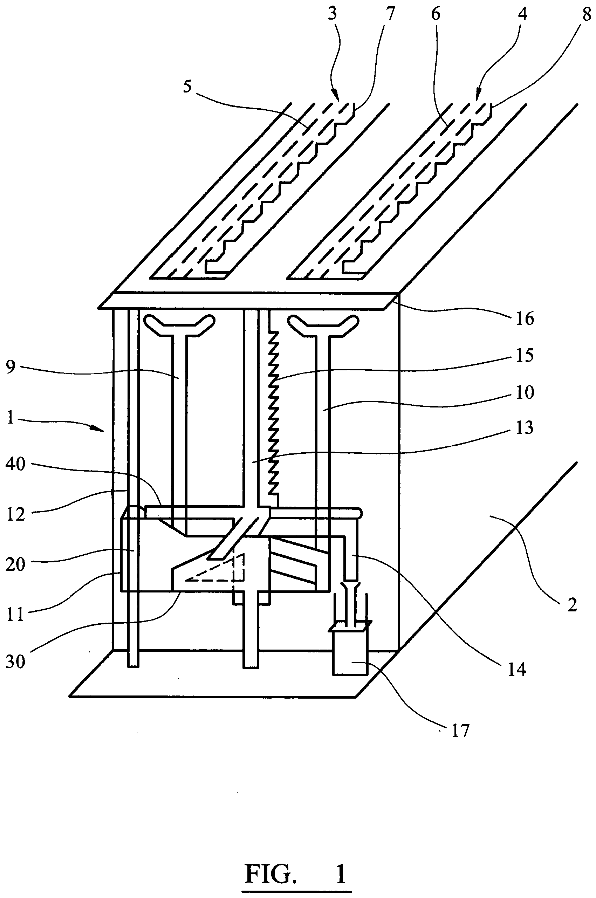

Figure 1 shows a toaster Figure 1 shows a schematic plan view of a toaster 1 comprising a main housing 2 having first and second bread or toasting cavities 3,4. Heating elements 5,6 are arranged in each bread cavity 3,4 and in use are adapted to toast a piece of bread located on a respective bread support 7,8. Each bread support 7,8 comprises a plurality of alternating metal supports and extends through a respective slot 9,10. The bread supports are also supported at the end of the bread cavities 3,4.

The two bread supports 7,8 are attached to a carriage 11, which is adapted to slide on two vertical rods 12,13, the lower ends of which are mounted on the base of the housing 2 and the upper ends of which are attached to a flange 16 extending from the upper surface of the toaster. The rod 13 is located substantially equidistantly from the two bread cavities 3,4. A spring 15 is attached to both the flange 16 and the carriage 11, so that the carriage is urged into a raised position in which the bread or toast is raised above the upper surface of the housing.

The switch 17 for actuating the timer, pop-up and heating elements comprises two pairs of upstanding elements having opposing contacts at their distal ends. The downward projection 14 which is integral with the carriage 11, in use, will force the respective contacts together when it is inserted between the two pairs of upstanding contact arms. As the upstanding contact arms are resilient, the downward projection is urged away from the lowest position by the resilience of the contact arms. The carriage 11 is held in the lower position against the force generated by the spring by means of an electromagnet, which is actuated by the closing of the contacts. The toaster is provided with an NTC thermistor, which is adapted to measure the temperature in the PCB cavity, ideally adjacent to the toasting cavity and supply this data to a control unit, which determines the appropriate length of the toasting cycle as described in more detail below. Once the predetermined toasting time has elapsed, the timer circuit breaks the contact so that the carriage is released from the lowest position.

In known toasters, a common control algorithm is to provide each toaster setting with a duration:

| Setting | 1 | 2 | 3 | 4 | 5 | 6 | 7 | 8 |
|---|---|---|---|---|---|---|---|---|
| Base Timing (s) | 85 | 100 | 118 | 135 | 150 | 165 | 180 | 210 |

For darker toast, a higher setting is selected and the base timing is increased as the toaster element will operate at a constant setting as to toast the bread, the sugars need to caramelise..

If the NTC detects the temperature is above the setpoint temperature of typically 40°C the toast cycle is reduced by 20 s from the base timing. If the temperature is below the setpoint, the base timing is used.

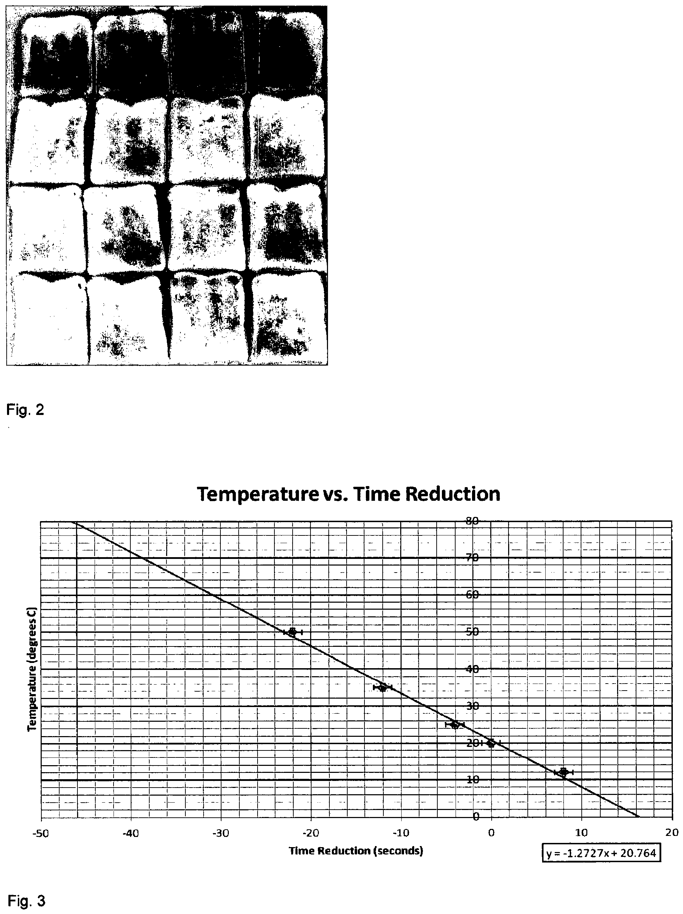

Figure 2 shows a selection of toast made with a prior art toaster in which the operating time is simply reduced by 20 s for the second toasting cycle. This shows that the first piece of toast is toasted to an acceptable level but that the subsequent pieces are too light or under toasted for most consumers' tastes. The reverse problem where subsequent slices are burnt also occurs.

In an exemplary embodiment of the invention, when the toasting cycle is actuated, the temperature of the NTC thermistor is determined and this temperature is used to calculate the time of the toasting cycle. At the end of the calculated time, the toasting cycle is ended and if appropriate the toaster pop up is released.

Figure 3 shows a graph of NTC thermistor temperature at actuation of the toasting cycle against calculated time reduction. The graph has five points on it corresponding to the following example designed for setting 5 with a base time of 150s in the known toasters:

| Cycle | Time (s) | NTC temperature at start of cycle(°C) |
|---|---|---|
| 1 | 152 | 18 |

30 sec gap until next cycle

| | | |
|---|---|---|
| 2 | 124 | 54 |

3 mins gap until next cycle

| | | |
|---|---|---|
| 3 | 133 | 42 |

15 mins gap until next cycle

| | | |
|---|---|---|
| 4 | 148 | 23 |

20 sec until next cycle

| | | |
|---|---|---|
| 5 | 119 | 60 |

The points follow a substantially linear relationship that can be described with the following equation:

$$\Delta t = \frac{T1 - a}{b}$$

where $\Delta t$ is the change in toasting cycle time, T1 is the measured NTC thermistor temperature and a and b are constants depending on toaster configuration. In the toaster used in this example (a Dualit® Lite toaster) a= 20.8 and b = -1.27.

Thus the toaster of the invention can also adjust for ambient conditions as in the first example, the NTC is below room temperature at 18°C and so the toasting cycle time is increased. In the second example above, the NTC temperature is 54°C and so the time is decreased by 26 s, which is more than the standard toasters. Unlike in the known toasters, the length of the toasting cycle is increased from the base time when the ambient temperature is below standard room temperature of 21°C.

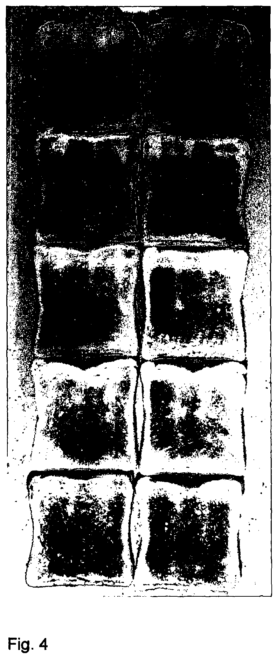

Figure 4 shows examples of the toast produced according to the previous example, which shows that the toast has a much more uniform colour than in the known toasters.

**Claims**

1. A toaster comprising heating elements (5,6) in a toasting cavity (3,4), a temperature sensor and a timer adapted to vary the length of the toasting cycle, the toaster comprising a control unit in a PCB cavity adapted to take the measurement of the temperature after or upon actuation of the toaster, wherein a base length for the toasting cycle is defined in dependence on a browning setting and the base length of the toasting cycle is adjusted to provide an actual length of the toasting cycle in dependence at least in part on the detected temperature,

   **characterised in that** the temperature sensor is adapted to measure the temperature in the PCB cavity and the adjustment to the base length of the toasting cycle is made in accordance with the formula:

   $$\Delta t = \frac{T1 - a}{b}$$

   where $\Delta t$ is change in cycle length and T1 the measured temperature where a is in the range of 15-25 C and b is in the range of -1 to -1.8 dependent on toaster configuration.

2. A toaster according to Claim 1, wherein a is in the range of 20-22 C.

3. A toaster according to Claim 1 or Claim 2, wherein b is in the range of -1.2 to - 1.5.

4. A method of toasting bread in a toaster having a toasting cavity (3,4), which toaster is provided with a temperature sensor for measuring the temperature and a timer adapted to vary the length of the toasting cycle in a PCB cavity, the method further comprising detecting the temperature in the toaster defining a base length for the toasting cycle in dependence on a browning setting and adjusting the base length of the toasting cycle to provide an actual length of the toasting cycle in dependence at least in part on the detected temperature, **characterised in that** the temperature sensor is adapted to measure the temperature in the PCB cavity and the adjustment to the base length of the toasting cycle is made in accordance with the formula:

   $$\Delta t = \frac{T1 - a}{b}$$

   where $\Delta t$ is change in cycle length and T1 the measured temperature where a is in the range of 15-25 C and b is in the range of -1 to -1.8 dependent on toaster configuration.

5. A method according to Claim 4, wherein a. is in the range of 20-22 C.

6. A method according to any one of Claim 4 or Claim 5, wherein b.is in the range of -1.2 to -1.5.

**Patentansprüche**

1. Toaster, umfassend Heizelemente (5, 6) in einem Rösthohlraum (3, 4), einen Temperatursensor und eine Zeitschaltuhr, die dazu eingerichtet ist, die Länge des Röstzyklus zu variieren, wobei der Toaster eine Steuereinheit in einem Leiterplattenhohlraum umfasst, die dazu eingerichtet ist, den Messwert der Temperatur nach oder bei Betätigung des Toasters heranzuziehen, wobei eine Grundlänge für den Röstzyklus in Abhängigkeit von einer Bräunungseinstellung definiert ist und die Grundlänge des Röstzyklus angepasst wird, um eine Ist-Länge des Röstzyklus in Abhängigkeit mindestens teilweise von der erfassten Temperatur bereitzustellen,

   **dadurch gekennzeichnet, dass** der Temperatursensor dazu eingerichtet ist, die Temperatur in dem Leiterplattenhohlraum zu messen und die Anpassung auf die Grundlänge des Röstzyklus gemäß folgender Formel erfolgt:

$$\Delta t = \frac{T1 - a}{b}$$

   wobei $\Delta t$ die Änderung der Zykluslänge ist und $T1$ die gemessene Temperatur ist, wobei abhängig von der Toasterkonfiguration $a$ im Bereich von 15-25 C liegt und $b$ im Bereich von -1 bis -1,8 liegt.

2. Toaster nach Anspruch 1, wobei $a$ im Bereich von 20-22 C liegt.

3. Toaster nach Anspruch 1 oder Anspruch 2, wobei $b$ im Bereich von -1,2 bis -1,5 liegt.

4. Verfahren zum Rösten von Brot in einem Toaster, der einen Rösthohlraum (3, 4) aufweist, wobei der Toaster mit einem Temperatursensor zum Messen der Temperatur und einer Zeitschaltuhr, die dazu angepasst ist, die Länge des Röstzyklus zu variieren, in einem Leiterplattenhohlraum versehen ist, wobei das Verfahren ferner Folgendes umfasst: Erfassen der Temperatur in dem Toaster, Definieren einer Grundlänge für den Röstzyklus in Abhängigkeit von einer Bräunungseinstellung und Anpassen der Grundlänge des Röstzyklus, um eine Ist-Länge des Röstzyklus bereitzustellen, in Abhängigkeit mindestens teilweise von der erfassten Temperatur, **dadurch gekennzeichnet, dass** der Temperatursensor dazu angepasst ist, die Temperatur in dem Leiterplattenhohlraum zu messen und die Anpassung der Grundlänge des Röstzyklus gemäß der folgenden Formel erfolgt:

$$\Delta t = \frac{T1 - a}{b}$$

   wobei $\Delta t$ die Änderung der Zykluslänge ist und $T1$ die gemessene Temperatur ist, wobei abhängig von der Toasterkonfiguration $a$ im Bereich von 15-25 C liegt und $b$ im Bereich von -1 bis -1,8 liegt.

5. Verfahren nach Anspruch 4, wobei $a$. im Bereich von 20-22 C liegt.

6. Verfahren nach einem von Anspruch 4 oder Anspruch 5, wobei $b$. im Bereich von -1,2 bis -1,5 liegt.

**Revendications**

1. Grille-pain comprenant des éléments chauffants (5, 6) dans une cavité de grillage (3, 4), un capteur de température et un minuteur adapté à faire varier la longueur du cycle de grillage, le grille-pain comprenant un module de commande dans une cavité de carte de circuit imprimé adapté à prendre la mesure de la température après ou dès l'actionnement du grille-pain, dans lequel une longueur de base pour le cycle de grillage est définie en fonction d'un réglage de brunissage et la longueur de base du cycle de grillage est ajustée pour fournir une longueur réelle du cycle de grillage en fonction au moins en partie de la température détectée,

   **caractérisé en ce que** le capteur de température est adapté à mesurer la température dans la cavité de carte de circuit imprimé et l'ajustement à la longueur de base du cycle de grillage est réalisé conformément à la formule :

$$\Delta t = \frac{T1 - a}{b}$$

où $\Delta t$ est un changement de la longueur de cycle et T1 la température mesurée, où a est dans la plage de 15 à 25 °C et b est dans la plage de -1 à -1,8 en fonction de la configuration du grille-pain.

2. Grille-pain selon la revendication 1, dans lequel a est dans la plage de 20 à 22 °C.

3. Grille-pain selon la revendication 1 ou la revendication 2, dans lequel b est dans la plage de -1,2 à -1,5.

4. Procédé de grillage de pain dans un grille-pain ayant une cavité de grillage (3, 4), lequel grille-pain est pourvu d'un capteur de température pour mesurer la température et d'un minuteur adapté à faire varier la longueur du cycle de grillage dans une cavité de carte de circuit imprimé, le procédé comprenant en outre détecter la température dans le grille-pain définissant une longueur de base pour le cycle de grillage en fonction d'un réglage de brunissage et ajuster la longueur de base du cycle de grillage pour fournir une longueur réelle du cycle de grillage en fonction au moins en partie de la température détectée, **caractérisé en ce que** le capteur de température est adapté à mesurer la température dans la cavité de carte de circuit imprimé et l'ajustement à la longueur de base du cycle de grillage est réalisé conformément à la formule :

$$\Delta t = \frac{T1 - a}{b}$$

où $\Delta t$ est un changement de la longueur de cycle et T1 la température mesurée, où a est dans la plage de 15 à 25 °C et b est dans la plage de -1 à -1,8 en fonction de la configuration du grille-pain.

5. Procédé selon la revendication 4, dans lequel a est dans la plage de 20 à 22 °C.

6. Procédé selon l'une quelconque de la revendication 4 ou la revendication 5, dans lequel b est dans la plage de -1,2 à -1,5.

FIG. 1

Fig. 2

## Temperature vs. Time Reduction

$y = -1.2727x + 20.764$

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2318502 A
- GB 2420966 A
- US 6198078 B
- US 6006656 A
- US 20030196556 A
- US 20040144257 A
- EP 1397025 A
- US 4894518 A